# EUROPÄISCHE PATENTSCHRIFT

(11) **EP 3 165 884 B1**
(45) Veröffentlichungstag und Bekanntmachung des Hinweises auf die Patenterteilung: **09.05.2018**
(21) Anmeldenummer: 16002241.4
(22) Anmeldetag: 18.10.2016
(51) Int. Cl.: G01G 15/00, B65B 1/32, B65B 1/46, G01G 17/00, G01G 23/01

(54) **KARUSSELLWAAGE UND VERFAHREN ZU DEREN KALIBRIERUNG**
CAROUSEL WEIGHER AND METHOD FOR ITS CALIBRATION
BALANCE À CARROUSEL ET PROCÉDÉ DE CALIBRATION

(30) Priorität: 06.11.2015 DE 102015119062
(43) Veröffentlichungstag der Anmeldung: 10.05.2017
(73) Patentinhaber: Sartorius Lab Instruments GmbH & Co. KG, 37079 Göttingen (DE)
(72) Erfinder: Eger, Matthias, 37434 Wollbrandshausen (DE); Fröhlich, Thomas, 98693 Ilmenau (DE); Hilbrunner, Falko, 98693 Ilmenau (DE); Rogge, Norbert, 98693 Ilmenau (DE)

(56) Entgegenhaltungen:
- JP-A- S58 113 722
- JP-B2- 5 064 533

## Beschreibung

### Gebiet der Erfindung

Die Erfindung bezieht sich auf ein Verfahren zum Betrieb einer Karussellwaage mit einer Mehrzahl ringförmig an einer kontinuierlich rotierenden Basis angeordneter und auf einer in mehrere Funktionssektoren unterteilten Kreisbahn bewegter Wägezellen, wobei
- die Wägezellen in einem Beladesektor mit jeweils einer zu verwiegenden Probe beladen werden,
- in einem Wägesektor entsprechende dynamische Probengewichtswerte ermittelt werden,
- die dynamischen Probengewichtswerte mit den Wägezellen jeweils zugeordneten Korrekturwerten korrigiert werden und
- in einem Entladesektor die Proben von den Wägezellen entnommen werden.

Die Erfindung bezieht sich weiter auf eine Karussellwaage, umfassend
- eine Mehrzahl ringförmig an einer kontinuierlich rotierbaren Basis angeordneter und auf einer Kreisbahn bewegbarer Wägezellen, mittels welcher auf den Wägezellen positionierte Wägegüter einzeln zur Ermittlung entsprechender Wägewerte verwiegbar sind,
- eine Beladestation, mittels welcher die Wägezellen mit jeweils einer zu verwiegenden Probe beladbar sind,
- eine Entladestation, mittels welcher verwogene Proben von den Wägezellen entnehmbar sind,
- eine Korrektureinheit, mittels welcher als dynamische Probengewichtswerte ermittelte Wägewerte mit den Wägezellen jeweils zugeordnete Korrekturwerte korrigierbar sind.

### Stand der Technik

Derartige Karussellwaagen und Verfahren zu deren Betrieb sind bekannt aus der JP 2014-14 222 5A. Weiterhin ist aus der US 2009/022989 A1 eine Karussellwaage bekannt, bei der mittels eines bekannten statischen Referenzgewichtes ein Korrekturwert bei zwei verschiedenen Rotationsgeschwindigkeiten der gesamten Karussellwaage ermittelt wird.

In vielen Bereichen der Warenkonfektionierung und -distribution ist es erforderlich, von einer Vielzahl von Wareneinheiten innerhalb kurzer Zeit mehr oder weniger präzise Wägungen vorzunehmen. Es kann sich dabei um Kontrollwägungen handeln, ob eine Wareneinheit einer Gewichtsvorgabe entspricht, oder um Absolutwägungen, mit denen bspw. zur Bestimmung gewichtsabhängiger Preise Wareneinheiten weitgehend unbekannten Gewichtes bestimmt werden. Kontrollwägungen im obigen Sinn finden beispielsweise bei Abfüllprozessen Anwendung. Zur Raum- und Zeitersparnis finden hierzu häufig sogenannte Karussellwaagen Einsatz. Eine Karussellwaage weist eine Vielzahl autonom arbeitender Wägezellen auf, die ringförmig auf einer kontinuierlich rotierbaren Basis angeordnet sind. Die Basis kann bspw. als Drehteller ausgebildet sein, auf dem die Wägezellen angeordnet sind, oder als Gestell, an welchem die Wägezellen aufgehängt sind, oder auf andere Weise. Jede Wägezelle verfügt, wie allgemein üblich, über eine Lastaufnahme, die mit dem Wägegut beladbar ist und die (typischerweise) über einen Hebelmechanismus mit einem mechatronischen Wägesystem verbunden ist. Es sind unterschiedliche Arten der Wandlung der mechanischen Last in einen die Last repräsentierenden, elektrischen oder elektronischen Ausgabewert bekannt, deren Einzelheiten im Kontext der vorliegenden Erfindung nicht relevant sind.

Bei Rotation der Basis führen die Wägezellen eine Kreisbahn-Bewegung um eine vertikale Achse durch. In einem Beladesektor dieser Kreisbahn ist eine Beladestation angeordnet, in welcher die zu verwiegenden Proben auf die einzelnen Wägezellen, insbesondere deren Lastaufnehmer aufgesetzt werden. Je nach geforderter Wägepräzision erfolgt das Beladen der Wägezellen mehr oder weniger reproduzierbar. Sind nur grobe Wägungen erforderlich, kann die Probe in nahezu beliebiger Weise auf die Lastaufnahme gelegt werden; bei Präzisionsmessungen ist hingegen eine sehr positionstreue, reproduzierbare Beladetechnik erforderlich. Die Einzelheiten der Beladetechnik sind jedoch im Kontext der vorliegenden Erfindung von untergeordneter Bedeutung.

In einem Entladesektor der Kreisbahn werden die Proben wieder von den Wägezellen entnommen. Zwischen dem Beladesektor und dem Entladesektor befindet sich ein Wägesektor dessen Durchfahren den Wägezellen hinreichend Zeit gibt, nach einem Einschwingvorgang, der sich dem Beladevorgang anschließt, einen das Gewicht der Probe repräsentierenden Wägewert zu erzeugen und auszugeben, in der Regel an eine zentrale Steuereinheit.

Problematisch hierbei ist, dass es sich bei den aufgenommenen Wägewerten aufgrund der Rotationsbewegung der Basis (und mit ihr der Wägezellen) um dynamische Probengewichtswerte handelt, wohingegen in der Regel die statischen Probengewichtswerte bzw. Probenmassen gesucht sind. Mit anderen Worten sind diejenigen Probengewichtswerte gesucht, die sich aus einer Wägung mit stillstehender Wägezelle ergeben würden, wobei jedoch eine Karussellwaage prinzipbedingt nur mit bewegten Wägezellen aufgenommene, dynamische Probengewichtswerte zu liefern in der Lage ist. Zu diesen dynamischen Probengewichtswerten tragen außer dem reinen Probengewicht auch Vibrations- und vor allem Fliehkräfte bei, die ebenfalls auf den Wägesensor wirken.

Die o.g., gattungsbildende Druckschrift begegnet diesem Problem mit der Ermittlung und Speicherung eines Korrekturwertes für jede Wägezelle, wobei sich der Korrekturwert aus der Differenz einer Leerwägung in rotierendem Zustand und im Stillstand der Karussellwaage ergibt. Mit anderen Worten ist es bekannt, für jede unbelastete Wägezelle einen Wägewert im Stillstand der Karussellwaage und bei rotierender Basis aufzunehmen, deren Differenz zu berechnen und als der jeweiligen Wägezelle zugeordneten Korrekturwert zu speichern. Mit diesem Korrekturwert werden in der Folge die dynamischen Probengewichtswerte, die mit dieser Wägezelle ermittelt werden, korrigiert.

Es hat sich ergeben, dass diese Form der Korrektur bei hochgenauen Präzisionsmessungen, wie sie bspw. im Rahmen von Abfüllvorgängen in der Pharmaindustrie (z.B. Abfüllen einzelner Impfdosen) auftreten, nicht hinreichend sind.

### Aufgabenstellung

Es ist die Aufgabe der vorliegenden Erfindung, die bekannten Karussellwaagen und Verfahren zu deren Betrieb derart weiterzubilden, dass die Abweichung der dynamischen Probengewichtswerte von den eigentlich gesuchten statischen Gewichtswerten reduziert wird.

### Darlegung der Erfindung

Diese Aufgabe wird in Verbindung mit den Merkmalen des Oberbegriffs von Anspruch 1 dadurch gelöst, dass in einem in Rotationsrichtung hinter dem Entladesektor und vor dem Beladesektor gelegenen Kalibriersektor
- die Wägezellen mit jeweils einem Referenzgewichtsstück (Referenzmasse) bekannten statischen Referenzgewichtes beladen werden,
- entsprechende dynamische Referenzgewichtswerte ermittelt werden und
- die Korrekturwerte durch Vergleich der ermittelten dynamischen Referenzgewichtswerte mit den bekannten statischen Referenzgewichten berechnet werden.

Die Aufgabe wird weiter in Verbindung mit den Merkmalen des Oberbegriffs von Anspruch 9 gelöst durch
- eine in einer in Rotationsrichtung hinter der Entladestation und vor der Beladestation gelegene Kalibrierstation, mittels welcher die Wägezellen mit jeweils einem Referenzgewichtsstück bekannten statischen Referenzgewichtes be- und nachfolgend wieder entladbar sind, und
- eine Korrekturwertermittlungseinheit, mittels welcher die Korrekturwerte durch Vergleich von als dynamische Referenzgewichtswerte ermittelten Wägewerten mit den bekannten statischen Referenzgewichten berechenbar sind.

Bevorzugte Ausführungsformen sind Gegenstand der abhängigen Patentansprüche.

Die Erfindung beruht auf der Erkenntnis, dass die zur Korrektur der dynamischen Probengewichtswerte erforderlichen Korrekturwerte, die bspw. als Korrekturfaktoren oder Korrektursummanden gestaltet sein können, ihrerseits selbst vom Belastungszustand der Wägezellen abhängig sind. So erfordern insbesondere unterschiedliche Probengewichte, die mit ein und derselben Wägezelle verwogen werden unterschiedliche Korrekturwerte. Dies liegt vorwiegend daran, dass unterschiedliche Probengewichte unterschiedliche Fliehkräfte, die auf den Wägesensor wirken, hervorrufen.
Die Erfindung sieht daher vor, die Wägezellen in einem in Rotationsrichtung zwischen dem Entladesektor und dem Beladesektor, d.h. in einem Bereich der Kreisbahn, in dem die Wägezellen von Proben unbelastet sind, in einer dort angeordneten Kalibrierstation jeweils mit einem Referenzgewichtsstück zu beladen. Das statische Referenzgewicht (Masse) des Referenzgewichtsstücks muss dabei bekannt sein. Im Anschluss werden von den Wägezellen jeweils ein Wägewert aufgenommen. Es handelt sich dabei um den dynamischen Referenzgewichtswert des Referenzgewichtsstücks. Ein Vergleich des so mit bewegter Wägezelle ermittelten, dynamischen Referenzgewichtswertes mit dem vorab bekannten, statischen Referenzgewicht des Referenzgewichtsstücks liefert den für die mit dem Referenzgewicht belastete Wägezelle hochgenauen Korrekturwert. Der Fachmann wird verstehen, dass dieser Wert umso besser zur Korrektur der mit einer Probe belasteten Wägezelle übertragbar ist, je genauer das statische Referenzgewicht mit dem statischen Probengewicht übereinstimmt. Der so ermittelte Korrekturwert wird der betreffenden Wägezelle zugeordnet und zur späteren Verwendung bei der Korrektur von dynamischen Probengewichtswerten abgespeichert. Wenn das Referenzgewichtsstück zudem in der Form an die Probe angepasst ist, können auch Fehler durch parasitäre Momente, parasitäre Radialkräfte und parasitäre aerodynamische Kräfte reduziert werden.

Im Anschluss an die Ermittlung des dynamischen Referenzgewichtswertes wird das Referenzgewichtsstück von der Wägezelle entnommen und zurück zur Kalibrierstation überführt. Der Fachmann erkennt, dass es nicht erforderlich, wenngleich grundsätzlich möglich, ist, jede Wägezelle mit demselben Referenzgewichtsstück zu kalibrieren. Vielmehr kann, was aus Geschwindigkeitsgründen vorteilhaft ist, eine Mehrzahl von Referenzgewichtsstücken verwendet werden. Dabei ist es auch nicht erforderlich, dass die Referenzgewichtsstücke untereinander exakt dasselbe statische Referenzgewicht aufweisen. Dies ist eine Folge der individuellen Kalibrierung jeder Wägezelle und der Aufnahme von jeweils den Wägezellen zugeordneten Korrekturwerten. Der Fachmann hat selbstverständlich darauf zu achten, dass die Gewichtsabweichungen zwischen den Referenzgewichtsstücken untereinander und damit auch die Abweichungen zwischen den Gewichten der Referenzgewichtsstücke einerseits und der Proben andererseits nicht so groß werden, dass die ermittelten Korrekturwerte zu ungenau werden, um die erwünschte Präzision zu erreichen. Bei sinnvoller Wahl der Referenzgewichtsstücke ergibt sich aufgrund der vorliegenden Erfindung jedenfalls eine deutliche Verbesserung der Korrekturwertermittlung, sodass die ggf. verbleibenden Abweichungen zwischen den statischen Probengewichten den ermittelten, dynamischen Probengewichtswerten gegenüber dem Stand der Technik deutlich verringert werden.
Als besonders vorteilhaft hat es sich erwiesen, wenn eine Mehrzahl von Referenzgewichtsstücken ringförmig an einem gegenläufig zur Basis rotierbaren Referenzgewichtsträger gelagert und in einem Überlappungsbereich der Rotationen von Referenzgewichtsträger und Basis mittels einer Referenzgewichtsstück-Transfervorrichtung einzeln von dem rotierenden Referenzgewichtsträger auf jeweils eine Wägezelle und zurück zum Referenzgewichtsträger überführbar sind. Die einander überlappenden Rotationskreise von Referenzgewichtsträger und Basis schneiden einander an zwei Punkten. An diesen Stellen erfolgt bevorzugt die Übergabe der Referenzgewichtsstücke vom Referenzgewichtsträger auf eine Wägezelle bzw. von dieser Wägezelle zurück zum Referenzgewichtsträger. Die Zeit, die eine Wägezelle zur Fahrt zwischen diesen beiden Übergabepunkten benötigt, kann zur Messwertaufnahme des dynamischen Referenzgewichtswertes genutzt werden. Die Anzahl der Referenzgewichtsstücke muss nicht mit der Anzahl der Wägezellen übereinstimmen. Sie muss jedoch mindestens so groß sein, wie die Anzahl der jeweils im Überlappungsbereich der beiden Rotationskreise befindlichen Wägezellen, falls jede Wägezelle in jedem Umlauf überprüft werden soll. Wenn hingegen eine Überprüfung jeder Wägezelle in nur jeder n-te Runde (mit n > 1) als ausreichend angesehen wird, kann die Anzahl der Referenzgewichtsstücke entsprechend reduziert werden, sodass benachbarte Wägezellen in unterschiedlichen Runden überprüft werden.

Wenn, wie bei einer bevorzugten Ausführungsform vorgesehen, der Referenzgewichtsträger als ein auswechselbares Magazin mit einer Mehrzahl ringförmig darin gelagerter Referenzgewichtsstücke ausgebildet ist, ist es besonders einfach, die für die jeweilige Wägeaufgabe optimalen Referenzgewichte zu verwenden. Bei Änderung des erwarteten Probengewichts muss dann lediglich das Referenzgewichtsstück-Magazin entnommen und ein anderes Magazin mit passenden Referenzgewichtsstücken eingesetzt werden.

Grundsätzlich denkbar ist eine Neukalibrierung der Wägezellen bei jedem Umlauf der Karussellwaage. Damit werden die Korrekturwerte zwar optimiert; es ergibt sich jedoch das Problem, dass langfristige Schwankungen der Messbedingungen, bspw. eine langsame Änderung der Rotationsgeschwindigkeit oder eine langsame Temperaturänderung im Bereich der Wägesensoren unerkannt bleiben können. Bei einer bevorzugten Ausführungsform der Erfindung ist daher vorgesehen, dass die Berechnung der Korrekturwerte deren Erstberechnung während eines ersten Umlaufs und deren Stabilitäts-Überprüfung während jedes weiteren Umlaufs umfasst. Mechanisch und sensorisch unterscheidet sich die Kalibrierung während des ersten Umlaufs nicht von der Stabilitäts-Überprüfung der nachfolgenden Umläufe. Unterschiede bestehen lediglich in der Verarbeitung der ermittelten Wäge- bzw. Korrekturwerte. So sieht die bevorzugte Ausführungsform vor, dass ein im ersten Umlauf ermittelter Korrekturwert bei Folgeumläufen nicht verändert wird, sondern lediglich auf seine Validität hin überprüft wird, was durch Vergleich mit einem aktuell ermittelten Korrekturwert oder durch Vergleich der zugrunde liegenden Wägewerte erreicht werden kann. Erst im Fall, dass die aktuellen Werte mehr als eine vorgegebene Toleranz von den erstberechneten Werten abweichen, wird dies als Hinweis auf einen systematischen Fehler interpretiert, was Anlass zu einer Warnmeldung oder Ähnlichem geben kann. Alternativ oder zusätzlich kann auch ein Korrekturfaktor statistisch aus mehreren aufeinander folgenden Messungen der Referenzgewichtswerte ermittelt werden.

Insbesondere in Fällen, in denen die erfindungsgemäße Karussellwaage zur Kontrolle von Abfüllvorgängen verwendet wird, hat es sich als günstig erwiesen, wenn in einem in Rotationsrichtung hinter dem Kalibriersektor und vor dem Beladesektor gelegenen Tariersektor die Wägezellen mit jeweils einem leeren Probengefäß beladen und tariert werden. Hierzu ist in Rotationsrichtung der Basis hinter der Kalibrierstation und vor der Beladestation eine Probengefäß-Zuführstation, mittels welcher die Wägezellen mit jeweils einem leeren Probegefäß beladbar sind. Im Anschluss kann dann das Beladen der Wägezelle mit den zu verwiegenden Proben durch Einfüllen flüssigen oder schüttfähigen Probenmaterials in die auf den Wägezellen positionierten Probengefäße erfolgen. Hierzu weist die Beladestation bevorzugt eine Füllvorrichtung auf, mittels welcher die Probengefäße mit flüssigem oder schüttfähigem Probenmaterial befüllbar sind.

Zur Ausgestaltung des Füllvorgangs bzw. der Beladestation mit Füllvorrichtung sind unterschiedliche Varianten denkbar. Bei einer ersten Variante ist vorgesehen, dass das Beladen der Wägezellen mit den zu verwiegenden Proben durch Einfüllen von flüssigem oder schüttfähigem Probenmaterial in die auf den Wägezellen positionierten Probengefäße erfolgt. Dies verlangt jedoch einen Füllvorgang mit einer mit der Rotation der Basis mitbewegten Füllvorrichtung. Zudem besteht bei Fehlfüllung die Gefahr einer Verschmutzung der Wägezellen.

Bei einer zweiten Variante ist daher vorgesehen, dass das Beladen der Wägezellen mit den zu verwiegenden Proben durch
- Entnehmen der Probengefäßen von den Wägezellen,
- Fördern der Probengefäße zu einer benachbarten Füllvorrichtung,
- Einfüllen flüssigen oder schüttfähigen Probenmaterials in die Probengefäße und
- Repositionieren der gefüllten Probengefäße auf den Wägezellen
erfolgt, wobei jedes Probengefäß auf derjenigen Wägezelle repositioniert wird, von der es zuvor entnommen wurde. Bei dieser Ausführungsform hat die Beladestation also eine Umleitungsvorrichtung aufzuweisen, mittels welcher die Probengefäße von den Wägezellen entnehmbar, zu der Füllvorrichtung förderbar und mit Probenmaterial gefüllt auf den zugeordneten Wägezellen repositionierbar sind. Die Rückführung der gefüllten Probengefäße auf exakt diejenigen Wägezellen, von denen sie jeweils entnommen wurden ist im Hinblick auf die Gültigkeit der vorangegangenen Tarierung wichtig. Der Fachmann wird erkennen, dass es bei dieser Variante durchaus möglich ist, dass jede Wägezelle einen oder mehrere Umläufe durchführt und entsprechend ein oder mehrere Probengefäße zur Umleitungsvorrichtung transportiert, bevor ein entnommenes Probengefäß in gefülltem Zustand wieder auf ihr repositioniert wird. Die Umleitungsvorrichtung kann somit als zeitlicher Puffer genutzt werden, der einen längerwierigen Füllprozess erlaubt, bei dem bspw. eine diskontinuierliche Förderung der Probengefäße stattfindet.

Bei Ausführungsformen mit Umleitungsvorrichtung kann es günstig sein, im Beladesektor für jede Wägezelle nach der Entnahme und vor der Repositionierung des jeweiligen Probengefäßes einen Leerkontroll-Wägewert zu ermitteln. Es ist dies ein dynamischer "Gewichts"-Wert den die bewegte, unbelastete Wägezelle liefert. Dieser Wert kann, wie grundsätzlich aus dem Stand der Technik bekannt, zur (Mit-)Berechnung des der Wägezelle zugeordneten Kontrollwertes genutzt werden. Es ist jedoch auch - bevorzugt - möglich, die Leerkontroll-Wägewerte zu Überwachungszwecken zu nutzen und Auffälligkeiten hier als Indiz für eine Verschmutzung der zugeordneten Wägezelle oder andere systematische Fehler zu interpretieren. Selbstverständlich ist es auch möglich, alternativ oder zusätzlich derartige Leerkontroll-Wägewerte in anderen Kreisbahnsektoren, in denen die Wägezellen ebenfalls unbelastet sind, vorzunehmen. Bspw. kann dies in Rotationsrichtung der Basis hinter dem Kalibriersektor und vor dem Tarier- bzw. dem Beladesektor und/oder in Rotationsrichtung der Basis hinter dem Entladesektor und vor dem Kalibriersektor erfolgen.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung einer ersten Ausführungsform einer erfindungsgemäßen Karussellwaage
- Figur 2:: eine schematische Darstellung einer zweiten Ausführungsform einer erfindungsgemäßen Karussellwaage

### Ausführliche Beschreibung bevorzugter Ausführungsformen

Gleiche Bezugszeichen in den Figuren deuten auf gleiche oder analoge Elemente hin.

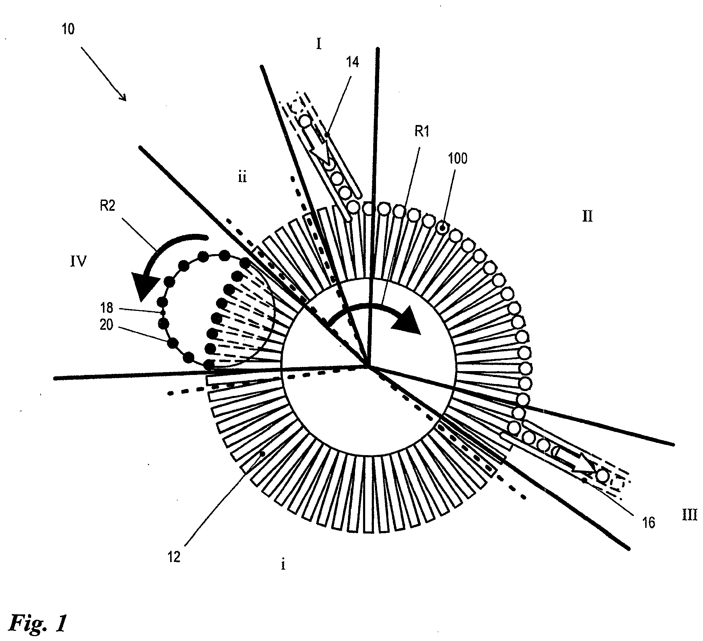

Figur 1 zeigt eine erste Ausführungsform einer erfindungsgemäßen Karussellwaage 10 in schematisierter Darstellung. Die Karussellwaage 10 weist eine Vielzahl von Wägezellen 12 auf, die ringförmig auf einer nicht näher dargestellten Basis montiert sind. Die Basis ist, wie durch den Rotationpfeil R1 angedeutet, rotierbar gelagert und mit einem entsprechenden Antrieb versehen. Um eine möglichst gleichmäßige Rotation der Basis zu ermöglichen, ist diese bevorzugt nach Art eines Schwungrades schwer ausgebildet. Man spricht in diesem Zusammenhang gelegentlich von einem Wägestein.

Der kreisbahnförmige Rotationsweg der Wägezellen 12 lässt sich in mehrere funktionale Sektoren unterteilen, die mit römischen Ziffern bezeichnet sind. Der Fachmann wird erkennen, dass die Sektorengrenzen nur grob angedeutet sind und insbesondere keine konstruktive Entsprechung haben müssen. In einem Beladesektor I ist eine Beladestation 14 angeordnet, welche zu verwiegende Proben 100 so zuführt, dass sie einzeln auf den Lastaufnehmern der Wägezellen 12 positioniert werden. Die spezielle Mechanik dieses Probentransfers ist im vorliegenden Zusammenhang - und auch ganz allgemein im Zusammenhang mit der vorliegenden Erfindung - nicht von Bedeutung. Insbesondere sind Varianten denkbar, bei denen Proben 100 auf die Lastaufnehmer aufgelegt werden, an entsprechend geformte Lastaufnehmer angehängt werden oder auf andere Weise lastsschlüssig mit Ihnen verbunden werden. Analoges gilt auch für andere, nachfolgend beschriebene Transfervorgänge.

In Rotationsrichtung anschließend liegt ein Wägesektor II, in dem die Wägezellen vom Gewicht der Proben 100 abhängige Wägewerte ermitteln. Aufgrund der Kreisbahnbewegung der Wägezellen 12 handelt es sich hierbei um dynamische Probengewichtswerte, die in der Regel nicht exakt mit deren statischen Gewichten übereinstimmen. Nach Ermittlung der dynamischen Probengewichtswerte werden die Proben 100 in einem sich anschließenden Entladesektor III mittels einer Entladestation 16 von den Wägezellen 12 entnommen und zu anderweitiger Verwendung, bspw. Verpackung, abgeführt.

Erfindungsgemäß ist ein weiterer Funktionssektor vorgesehen, nämlich der Kalibriersektor IV, der in Rotationsrichtung zwischen dem Entladesektor III und dem Beladesektor I angeordnet ist. Im Kalibriersektor IV ist eine Kalibrierstation 18 angeordnet, die einen nicht näher dargestellten Referenzgewichtsträger umfasst, der, wie durch den Rotationspfeil R2 angedeutet, gegenläufig zur Basis rotierbar gelagert und entsprechend angetrieben ist. Die Rotationskreise der Basis und des Referenzgewichtsträgers überlappen einander. Der Rotationsgewichtsträger trägt eine Mehrzahl von Referenzgewichtsstücken, die ringförmig an ihm angeordnet sind. Insbesondere kann der Referenzgewichtsträger in Form einer auswechselbaren Kassette mit ringförmig magazinierten Referenzgewichtsstücken ausgebildet sein. Die Kalibrierstation 18 umfasst weiter eine nicht weiter dargestellte Transfervorrichtung, mittels welcher die Wägezellen 12 im Kalibriersektor IV mit den Referenzgewichtsstücken 20 beladen und anschließend wieder entladen werden können. Auf ihrem Weg vom Referenzgewichtsstück-Beladepunkt zum -Entladepunkt ermitteln die Wägezellen 12 die dynamischen Referenzgewichtswerte der geladenen Referenzgewichtsstücke 20. Erfindungswesentlich ist, dass die statischen Gewichte der Referenzgewichtsstücke mit hinreichender Genauigkeit bekannt sind. Daher lassen sich durch Vergleich der im Kalibriersektor IV ermittelten dynamischen Referenzgewichtswerte mit den vorab bekannten statischen Referenzgewichten Korrekturwerte ermitteln, mit denen die im Wägesektor II ermittelten, dynamischen Probengewichtswerte korrigiert werden können, um deren statische Probegewichtswerte mit hinreichender Genauigkeit zu erhalten. Dies, d.h. die Berechnung der Korrekturwerte und die tatsächliche Korrektur der Probengewichtswerte, erfolgt in einer nicht näher dargestellten, zentralen Steuereinheit mit entsprechenden funktionalen Untereinheiten. Denkbar ist selbstverständlich auch eine dezentrale Datenverarbeitung. Der Fachmann wird hier nach Belieben unter den zur Verfügung stehenden Systemen wählen können.

In Rotationsrichtung zwischen dem Entladesektor III und dem Kalibriersektor IV einerseits bzw. zwischen dem Kalibriersektor IV und dem Beladesektor I andererseits befinden sich gestrichelt angedeutete Sektoren, in denen die Wägezellen 12 unbelastet sind. Diese mit i und ii bezeichneten Kontrollsektoren können zur Durchführung von Leerkontrollwägungen genutzt werden, in denen die Wägezellen 12 als Leerkontroll-Wägewerte bezeichnete Wägewerte im unbelasteten Zustand ermitteln. Diese müssten in jedem Umlauf gleich bleiben, insbesondere, sofern eine Nullsetzung erfolgt, stets Null sein. Abweichungen deuten auf systematische Fehler hin, bspw. eine Verschmutzung des Lastaufnehmers, sodass ein Warnsignal ausgegeben und eine Wartung der Anlage angefordert werden können.

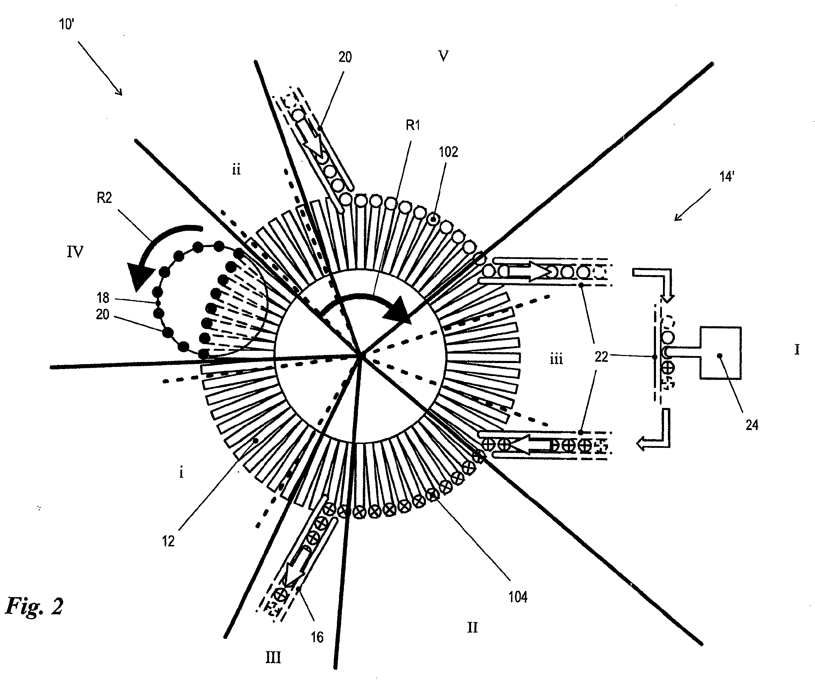

Figur 2 zeigt eine etwas komplexere Variante einer erfindungsgemäßen Karussellwaage 10, die im Wesentlichen anhand ihrer Unterschiede zur Ausführungsform von Figur 1 beschrieben werden soll. Die Karussellwaage 10 von Figur 2 ist zur Wägung von Proben geeignet, die als flüssiges oder schüttfähiges Probenmaterial in Probengefäße eingefüllt werden. Hierzu ist als ein zusätzlicher Funktionssektor der Tariersektor V vorgesehen, der in Rotationsrichtung zwischen dem Kalibriersektor IV und dem Beladesektor I liegt. Leere Probengefäße 102 werden mittels einer Probengefäß-Zuführstation 21 einzeln auf den Wägezellen 12 positioniert. In der Folge wird jede mit einem leeren Probengefäß 102 beladene Wägezelle 12 tariert.

Ein weiterer Unterschied zur Ausführungsform von Figur 1 besteht in der Ausgestaltung der Beladestation 14'. Eine Umleitungsvorrichtung 22 entlädt die leeren Probengefäße 102 von den Wägezellen 12 und führt sie einer Füllvorrichtung 24 zu, in der sie mit dem flüssigen oder schüttfähigen Probenmaterial befüllt werden. Im Anschluss transferiert die Umleitungsvorrichtung 22 die gefüllten Probengefäße 104 zurück auf die Wägezellen 12, wobei die Länge der Umleitung so zu gestalten ist, dass jedes gefüllte Probengefäß 104 exakt auf derjenigen Wägezelle 12 positioniert wird, von der es als leeres Probengefäß 102 zuvor entnommen wurde. Dabei ist es unerheblich, ob die Basis in der Zwischenzeit keinen oder eine ganzzahlige Anzahl von Umläufen durchgeführt hat.

In Folge der Umleitung der Probengefäße 102/104 ergibt sich im Bereich des Beladesektors I ein zusätzlicher Kontrollsektor iii, in dem alternativ oder zusätzlich zu den Kontrollsektoren i und ii Leerkontrollwägungen durchgeführt werden können. Im Übrigen kann vollumfänglich auf die Erläuterung zu Figur 1 verwiesen werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere wird der Fachmann erkennen, dass nicht nur eine möglichst gute Anpassung der statischen Referenzgewichte an die erwarteten statischen Probengewichte zu einer besonders guten Korrekturwertberechnung führt, sondern dass auch eine formmäßige Anpassung zu einer entsprechen Verbesserung beitragen kann, da auf diese Weise auch aerodynamische Effekte, die sich durch den Luftwiderstand der Referenzgewichtsstücke einerseits und der Proben andererseits ergeben, berücksichtigt werden. Optional können jeder Wägezelle auch mehrere Referenzgewichtsstücke zugeordnet sein. Diese würden in einem speziellen Lastwechsler, bspw. ausgeführt als eine Formscheibe, im Kalibriesektor automatisch aufgelegt.

### Bezugszeichenliste

- 10: Karussellwaage
- 10': Karussellwaage
- 12: Wägezelle
- 14: Beladestation
- 14': Beladestation
- 16: Entladestation
- 18: Kalibrierstation
- 20: Kalibriergewichtsstück
- 21: Probengefäß-Zuführstation
- 22: Umleitungsvorrichtung
- 24: Füllvorrichtung
- 100: Probe
- 102: leeres Probengefäß
- 104: gefülltes Probengefäß
- I: Beladesektor
- II: Wägesektor
- III: Entladesektor
- IV: Kalibriersektor
- V: Tariersektor
- i: Kontrollsektor
- ii: Kontrollsektor
- iii: Kontrollsektor
- R1: Rotationspfeil
- R2: Rotationspfeil

## Patentansprüche

1. Verfahren zum Betrieb einer Karussellwaage (10, 10') mit einer Mehrzahl ringförmig an einer kontinuierlich rotierenden Basis angeordneter und auf einer in mehrere Funktionssektoren (I, II, III, IV, V) unterteilten Kreisbahn bewegter Wägezellen (12), wobei
- die Wägezellen (12) in einem Beladesektor (I) mit jeweils einer zu verwiegenden Probe (100; 104) beladen werden,
- in einem Wägesektor (II) entsprechende dynamische Probengewichtswerte ermittelt werden,
- die dynamischen Probengewichtswerte mit den Wägezellen (12) jeweils zugeordneten Korrekturwerten korrigiert werden und
- in einem Entladesektor (III) die Proben (100; 104) von den Wägezellen entnommen werden,
**dadurch gekennzeichnet,**
**dass** in einem in Rotationsrichtung hinter dem Entladesektor (III) und vor dem Beladesektor (I) gelegenen Kalibriersektor (IV)
- die Wägezellen (12) mit jeweils einem Referenzgewichtsstück (20) bekannten statischen Referenzgewichtes beladen werden,
- entsprechende dynamische Referenzgewichtswerte ermittelt werden und
- die Korrekturwerte durch Vergleich der ermittelten dynamischen Referenzgewichtswerte mit den bekannten statischen Referenzgewichten berechnet werden.

2. Verfahren nach Anspruch 1,
**dadurch gekennzeichnet,**
**dass** die Berechnung der Korrekturwerte deren Erstberechnung während eines ersten Umlaufs und deren Stabilitäts-Überprüfung während jedes weiteren Umlaufs umfasst.

3. Verfahren nach einem der vorangehenden Ansprüche,
**dadurch gekennzeichnet,**
**dass** in einem in Rotationsrichtung hinter dem Kalibriersektor (IV) und vor dem Beladesektor (I) gelegenen Tariersektör (V) die Wägezellen (12) mit jeweils einem leeren Probengefäß (102) beladen und tariert werden.

4. Verfahren nach Anspruch 3,
**dadurch gekennzeichnet,**
**dass** das Beladen der Wägezellen mit den zu verwiegenden Proben durch Einfüllen flüssigen oder schüttfähigen Probenmaterials in die auf den Wägezellen positionierten Probengefäße erfolgt.

5. Verfahren nach Anspruch 3,
**dadurch gekennzeichnet,**
**dass** das Beladen der Wägezellen (12) mit den zu verwiegenden Proben durch
- Entnehmen der Probengefäße (102) von den Wägezellen,
- Fördern der Probengefäße (102) zu einer benachbarten Füllvorrichtung (24),
- Einfüllen flüssigen oder schüttfähigen Probenmaterials in die Probengefäße (102) und
- Repositionieren der gefüllten Probengefäßen (104) auf den Wägezellen (12)
erfolgt, wobei jedes Probengefäß (104) auf derjenigen Wägezelle repositioniert wird, von der es zuvor entnommen wurde.

6. Verfahren nach Anspruch 5,
**dadurch gekennzeichnet,**
**dass** im Beladesektor (I) für jede Wägezelle (12) nach der Entnahme und vor der Repositionierung des jeweiligen Probengefäßes (102/104) ein Leerkontroll-Wägewert ermittelt wird.

7. Verfahren nach einem der vorangehenden Ansprüche,
**dadurch gekennzeichnet,**
**dass** in Rotationsrichtung hinter dem Kalibriersektor (IV) und vor dem Tariersektor (V) für jede Wägezelle (12) ein Leerkontroll-Wägewert ermittelt wird.

8. Verfahren nach einem der vorangehenden Ansprüche,
**dadurch gekennzeichnet,**
**dass** in Rotationsrichtung hinter dem Entladesektor (III) und vor dem Kalibriersektor (IV) für jede Wägezelle (12) ein Leerkontroll-Wägewert ermittelt wird.

9. Karussellwaage, umfassend
- eine Mehrzahl ringförmig an einer kontinuierlich rotierbaren Basis angeordneter und auf einer Kreisbahn bewegbarer Wägezellen (12), mittels welcher auf den Wägezellen (12) positionierte Wägegüter (100; 104) einzeln zur Ermittlung entsprechender Wägewerte verwiegbar sind,
- eine Beladestation (I), mittels welcher die Wägezellen (12) mit jeweils einer zu verwiegenden Probe (100; 104) beladbar sind,
- eine Entladestation (III), mittels welcher verwogene Proben (100; 104) von den Wägezellen (12) entnehmbar sind,
- eine Korrektureinheit, mittels welcher als dynamische Probengewichtswerte ermittelte Wägewerte mit den Wägezellen jeweils zugeordnete Korrekturwerte korrigierbar sind,
**gekennzeichnet durch**
- eine in Rotationsrichtung hinter der Entladestation (III) und vor der Beladestation (I) gelegene Kalibrierstation (IV), mittels welcher die Wägezellen (12) mit jeweils einem Referenzgewichtsstück (20) bekannten statischen Referenzgewichtes be- und nachfolgend wieder entladbar sind, und
- eine Korrekturwertermittlungseinheit, mittels welcher die Korrekturwerte durch Vergleich von als dynamische Referenzgewichtswerte ermittelten Wägewerten mit den bekannten statischen Referenzgewichten berechenbar sind.

10. Karussellwaage nach Anspruch 9,
**dadurch gekennzeichnet,**
**dass** eine Mehrzahl von Referenzgewichtsstücken (20) ringförmig an einem gegenläufig zur Basis rotierbaren Referenzgewichtsträger gelagert und in einem Überlappungsbereich der Rotationen von Referenzgewichtsträger und Basis mittels einer Gewichtsstück-Transfervorrichtung einzeln von dem rotierenden Referenzgewichtsträger auf jeweils eine Wägezelle (12) und zurück zum Referenzgewichtsträger überführbar sind.

11. Karussellwaage nach Anspruch 10,
**dadurch gekennzeichnet,**
**dass** der Referenzgewichtsträger als ein auswechselbares Magazin mit einer Mehrzahl darin gelagerter Referenzgewichtsstücke (20) ausgebildet ist.

12. Karussellwaage nach einem der Ansprüche 9 bis 11,
**dadurch gekennzeichnet,**
**dass** in Rotationsrichtung der Basis hinter der Kalibrierstation (IV) und vor der Beladestation (I) eine Probengefäß-Zuführstation (21) angeordnet ist, mittels welcher die Wägezellen mit jeweils einem Probengefäß (102) beladbar sind.

13. Karussellwaage nach Anspruch 12,
**dadurch gekennzeichnet,**
**dass** die Beladestation (14') eine Füllvorrichtung (24) aufweist, mittels welcher die Probengefäße (102) mit flüssigem oder schüttfähigem Probenmaterial befüllbar sind.

14. Karussellwaage nach Anspruch 13,
**dadurch gekennzeichnet,**
**dass** die Beladestation (14') weiter eine Umleitungsvorrichtung (22) aufweist, mittels welcher die Probengefäße (102) von den Wägezellen (12) entnehmbar, zu der Füllvorrichtung (24) förderbar und mit Probenmaterial gefüllt auf den zugeordneten Wägezellen (12) repositionierbar sind.

## Claims

1. Method of operating a carousel weighing machine (10, 10') with a plurality of weighing cells (12) annularly arranged at a continuously rotating base and moved on a circular path divided into a plurality of function sectors (I, II, III, IV, V), wherein
- the weighing cells (12) are each loaded in a loading sector (I) with a respective sample (100; 104) to be weighed,
- corresponding dynamic sample weight values are determined in a weighing sector (II),
- the dynamic sample weight values are corrected by the weighing cells (12) to form respectively associated correction values and
- the samples (100; 104) are removed from the weighing cells in an unloading sector (III),
**characterised in that**
in a calibration sector (IV) disposed behind the unloading sector (III) and in front of the loading sector (I) in rotational direction
- the weighing cells (12) are each loaded with a reference weight piece (20) of known static reference weight,
- corresponding dynamic reference weight values are determined and
- the correction values are calculated by comparison of the determined dynamic reference weight values with the known static reference weights.

2. Method according to claim 1,
**characterised in that**
the calculation of the correction values comprises first calculation thereof during a first circulation and stability checking thereof during each further circulation.

3. Method according to one of the preceding claims,
**characterised in that**
the weighting cells (12) are each loaded with an empty sample vessel (102) and tared in a taring sector (V) disposed behind the calibrating sector (IV) and in front of the loading sector (I) in rotation direction.

4. Method according to claim 3,
**characterised in that**
the loading of the weighing cells with the samples to be weighed is carried out by pouring liquid or pourable sample materials into the sample vessels positioned on the weighing cells.

5. Method according to claim 3,
**characterised in that**
the loading of the weighing cells (12) with the samples to be weighed is carried out by
- removing the sample vessels (102) from the weighing cells,
- conveying the sample vessels (102) to an adjacent filling device (24),
- pouring liquid or pourable sample materials into the sample vessels (102) and
- repositioning the filled sample vessels (104) on the weighing cells (12),
wherein each sample vessel (104) is repositioned on that weighing cell from which it was previously removed.

6. Method according to claim 5,
**characterised in that**
an empty check weighing value is determined in the loading sector (I) for each weighing cell (12) after the removal and before the repositioning of the respective sample vessel (102/104).

7. Method according to any one of the preceding claims,
**characterised in that**
an empty check weighing value is determined for each weighing cell (12) after the calibration sector (IV) and ahead of the taring sector (V) in rotation direction.

8. Method according to any one of the preceding claims,
**characterised in that**
an empty check weighing value is determined for each weighing cell (12) after the unloading sector (III) and ahead of the calibrating sector (IV) in rotation direction.

9. Carousel weighing machine comprising
- a plurality of weighing cells (12) which are arranged annularly at a continuously rotatable base and are movable on a circular path and by means of which weighing materials (100; 104) positioned on the weighing cells (12) are individually weighable for determining corresponding weighing values,
- a loading station (I) by means of which the weighing cells (12) are each loadable with a sample (100; 104) to be weighed,
- an unloading station (III) by means of which weighed samples (100; 104) are removable from the weighing cells (12) and
- a correction unit by means of which weighing values determined as dynamic sample weight values can be corrected by correction values respectively associated with the weighing cells,
**characterised by**
- a calibrating station (IV) which is disposed behind the unloading station (III) and in front of the loading station (I) in rotation direction and by means of which the weighing cells (12) can each be loaded and subsequently unloaded again with a reference weight piece (20) of known static reference weight and
- a correction value determining unit by means of which the correction values can be calculated by comparison of weighing values, which are determined as dynamic reference weight values, with the known static reference weights.

10. Carousel weighing machine according to claim 9,
**characterised in that**
a plurality of reference weight pieces (20) is stored annularly at a reference weight carrier rotatable in opposite sense to the base and in a region of overlap of the rotations of reference weight carrier and base the pieces are individually transferrable by means of a weight piece transfer device from the rotating reference weight carrier to a respective weighing cell (12) and back to the reference weight carrier.

11. Carousel weighing machine according to claim 10,
**characterised in that**
the reference weight carrier is constructed as an exchangeable magazine with a plurality of reference weight pieces (20) stored therein.

12. Carousel weighing machine according to any one of claims 9 to 11,
**characterised in that**
a sample vessel feed station (21) by means of which the weighing cells can each be loaded with a respective sample vessel (102) is arranged behind the calibrating station (IV) and in front of the loading station (I) in direction of rotation of the base.

13. Carousel weighing machine according to claim 12,
**characterised in that**
the loading station (14') comprises a filling device (24) by means of which the sample vessels (102) can be filled with liquid or pourable sample material.

14. Carousel weighing machine according to claim 13,
**characterised in that**
the loading station (14') further comprises a diverting device (22) by means of which the sample vessels (102) can be removed from the weighing cells (12), conveyed to the filling device (24) and repositioned, filled with sample material, on the associated weighing cells (12).

## Revendications

1. Procédé de fonctionnement d'une balance à carrousel (10, 10') comprenant une pluralité de cellules de pesée (12) agencées sur une base rotative en continu de manière à former un anneau et déplacées sur une trajectoire divisée en plusieurs secteurs de fonctionnement (I, II, III, IV, V),
- les cellules de pesée (12) étant chargées dans un secteur de chargement (I) d'un échantillon (100 ; 104) respectif à peser,
- des valeurs dynamiques correspondantes du poids de l'échantillon étant déterminées dans un secteur de pesée (II),
- les valeurs dynamiques du poids de l'échantillon étant corrigées au moyen de valeurs corrigées respectivement associées aux cellules de pesée (12) et
- les échantillons (100 ; 104) étant prélevés des cellules de pesée dans un secteur de déchargement (III),
**caractérisé en ce que**
dans un secteur d'étalonnage (IV) situé derrière le secteur de déchargement (III) et devant le secteur de chargement (I) dans le sens de rotation
- les cellules de pesée (12) sont chargées d'un poids de référence (20) dont le poids de référence statique est connu,
- les valeurs de poids de référence dynamiques correspondantes sont déterminées et
- les valeurs de correction sont calculées par comparaison des valeurs de poids de référence dynamiques déterminées aux poids de référence statiques connus.

2. Procédé selon la revendication 1,
**caractérisé**
**en ce que** le calcul des valeurs de correction comporte un premier calcul de celles-ci pendant une première rotation et un contrôle de la stabilité de celles-ci pendant chaque rotation supplémentaire.

3. Procédé selon l'une quelconque des revendications précédentes,
**caractérisé**
**en ce que** les cellules de pesée (12) sont chacune chargées d'un récipient pour échantillon (102) vide et tarées dans un secteur de tarage (V) situé derrière le secteur d'étalonnage (IV) et devant le secteur de chargement (I) dans le sens de rotation.

4. Procédé selon la revendication 3,
**caractérisé en ce que**
le chargement des cellules de pesée en échantillons à peser est réalisé en remplissant les récipients pour échantillon positionnés sur les cellules de pesée d'un matériau échantillon liquide ou coulant.

5. Procédé selon la revendication 3,
**caractérisé**
**en ce que** le chargement des cellules de pesée (12) en échantillons à peser est réalisé par
- prélèvement des récipients pour échantillon (102) des cellules de pesée,
- transport des récipients pour échantillon (102) vers un dispositif de remplissage (24) voisin,
- remplissage des récipients pour échantillon (102) d'un matériau échantillon liquide ou coulant et
- repositionnement des récipients pour échantillon (104) sur les cellules de pesée (12), chaque récipient pour échantillon (104) étant repositionné sur la cellule de pesée dont il a été préalablement prélevé.

6. Procédé selon la revendication 5,
**caractérisé en ce que**
une valeur de pesée de contrôle à vide est déterminée dans le secteur de chargement (I) pour chaque cellule de pesée (12) avant le prélèvement et avant le repositionnement du récipient pour échantillon (102/104) respectif.

7. Procédé selon l'une quelconque des revendications précédentes,
**caractérisé**
**en ce qu'**une valeur de pesée de contrôle à vide est déterminée pour chaque cellule de pesée (12) derrière le secteur d'étalonnage (IV) et devant le secteur de tarage (V) dans le sens de rotation.

8. Procédé selon l'une quelconque des revendications précédentes,
**caractérisé**
**en ce qu'**une valeur de pesée de contrôle à vide est déterminée pour chaque cellule de pesée (12) derrière le secteur de déchargement (III) et devant le secteur d'étalonnage (IV) dans le sens de rotation.

9. Balance à carrousel, comprenant
- une pluralité d'éléments de pesée (12) agencés sur une base rotative en continu de manière à former un anneau et mobiles sur une trajectoire, au moyen desquels des articles à peser (100 ; 104) positionnés sur les cellules de pesée (12) peuvent être pesés individuellement pour déterminer des valeurs de pesée correspondantes,
- une station de chargement (I), au moyen de laquelle les cellules de pesée (12) peuvent être chargées chacune d'un échantillon (100 ; 104) à peser,
- une station de déchargement (III), au moyen de laquelle les échantillons (100 ; 104) pesés peuvent être prélevés des cellules de pesée (12),
- une unité de correction, au moyen de laquelle les valeurs de pesée déterminées en tant que valeurs dynamiques de poids d'échantillon peuvent être corrigées par les valeurs de correction respectivement associées aux cellules de pesée, **caractérisée par**
- une station d'étalonnage (IV) qui est située derrière la station de déchargement (III) et devant la station de chargement (I) dans le sens de rotation, et au moyen de laquelle les cellules de pesée (12) peuvent être chargées puis à nouveau déchargées d'un poids de référence (20) dont le poids de référence statique est connu, et
- une unité de détermination de valeur de correction, au moyen de laquelle les valeurs de correction peuvent être calculées par comparaison de valeurs de pesée déterminées en tant que valeurs de poids de référence dynamiques aux poids de référence statique connus.

10. Balance à carrousel selon la revendication 9,
**caractérisée**
**en ce qu'**une pluralité de poids de référence (20) sont montés de manière à former un anneau sur un support de poids de référence pouvant tourner dans le sens inverse de la base et peuvent être transférés un à un du support de poids de référence rotatif sur une cellule de pesée (12) respective et à nouveau au support de poids de référence, dans une zone de chevauchement des rotations du support de poids de référence et de la base, au moyen d'un dispositif de transfert de poids.

11. Balance à carrousel selon la revendication 10,
**caractérisée**
**en ce que** le support de poids de référence est réalisé sous la forme d'un magasin interchangeable dans lequel sont montés une pluralité de poids de référence (20).

12. Balance à carrousel selon l'une quelconque des revendications 9 à 11,
**caractérisée**
**en ce qu'**une station d'amenée de récipient pour échantillon (21), au moyen de laquelle les cellules de pesée peuvent être chargées chacune d'un récipient pour échantillon (102), est agencée derrière la station d'étalonnage (IV) et devant la station de chargement (I) dans le sens de rotation de la base.

13. Balance à carrousel selon la revendication 12,
**caractérisée**
**en ce que** la station de chargement (14') comprend un dispositif de remplissage (24) au moyen duquel les récipients pour échantillon (102) peuvent être remplis d'un matériau échantillon liquide ou coulant.

14. Balance à carrousel selon la revendication 13,
**caractérisée**
**en ce que** la station de chargement (14') comprend en outre un dispositif de déviation (22), au moyen duquel les récipients pour échantillon (102) peuvent être prélevés des cellules de pesée (12), transportés en direction du dispositif de remplissage (24) et, une fois remplis du matériau échantillon, repositionnés sur les cellules de pesée (12) associées.
